(19) **Europäisches Patentamt European Patent Office Office européen des brevets**

(11) **EP 4 152 727 B1**

(12) **EUROPEAN PATENT SPECIFICATION**

(45) Date of publication and mention
of the grant of the patent:
**29.11.2023 Bulletin 2023/48**

(21) Application number: **21205005.8**

(22) Date of filing: **27.10.2021**

(51) International Patent Classification (IPC):
***H04L 45/125*** (2022.01)

(52) Cooperative Patent Classification (CPC):
**H04L 45/125**

(54) **METHOD FOR OPTIMIZING A USAGE DISTRIBUTION IN A COMMUNICATIONS NETWORK**

VERFAHREN ZUR OPTIMIERUNG EINER NUTZUNGSVERTEILUNG IN EINEM
KOMMUNIKATIONSNETZ

PROCÉDÉ D'OPTIMISATION D'UNE DISTRIBUTION D'UTILISATION DANS UN RÉSEAU DE
COMMUNICATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.09.2021 DE 102021004716**

(43) Date of publication of application:
**22.03.2023 Bulletin 2023/12**

(73) Proprietors:
• **Fujitsu Technology Solutions GmbH
80807 München (DE)**
• **Deutsche Telekom AG
53113 Bonn (DE)**

(72) Inventors:
• **Geitz, Marc
58089 Hagen (DE)**
• **Holschke, Oliver
10969 Berlin (DE)**
• **Schüller, Timmy
48149 Münster (DE)**
• **Münch, Christian
80807 München (DE)**
• **Schinkel, Fritz
80807 München (DE)**
• **Engel, Sebastian
80807 München (DE)**

(74) Representative: **Epping - Hermann - Fischer
Patentanwaltsgesellschaft mbH
Schloßschmidstraße 5
80639 München (DE)**

(56) References cited:
**US-A1- 2017 286 852    US-A1- 2020 396 154**

• **JUEXIAO SU ET AL: "Fast Embedding of
Constrained Satisfaction Problem to Quantum
Annealer with Minimizing Chain Length",
20170618; 1077952576 - 1077952576, 18 June
2017 (2017-06-18), pages 1-6, XP058367890, DOI:
10.1145/3061639.3062246 ISBN:
978-1-4503-4927-7**

EP 4 152 727 B1

**Description**

The invention pertains to a computer-implemented method for optimizing a usage distribution in a communications network in which data traffic is routed, wherein the communications network has a plurality of communication nodes which are connectable over edges (links) of communication paths for a routing of the data traffic. The invention also pertains to a quantum concept processor configured for performing such a method, a computer program implemented to perform such a method, a system for a network planner and an interface arrangement.

Today's demands regarding data traffic in communications networks increase dramatically in these times. With the recent introduction of 5G, more and more devices and applications push data traffic to new peaks. Moreover, the increasing demand of digitized and decentralized working as well as increasing streaming demands in the domestic environment of private households are other big contributors to this trend. These increasing amounts of data being transported through communications networks like the internet impose a significant challenge to Service Providers. To avoid congestion of communications networks and degradation of user experience, traffic engineering techniques can be deployed to complement the comparatively slow and expensive expansion of network infrastructure.

The most widely deployed engineering techniques for data traffic management in communications networks operate on the premise of communication paths that are computed with respect to link weights. These weights are often related to link capacities, i.e., the maximum amount of data per unit time that can be routed over a link from a starting node to an end node connected by that link respectively edge. The final routing from a origin node to an destination node of the data streams, under the consideration of interim nodes and given links or edges, is based on the identified paths of the shortest paths found. As a result, the most straight-forward and practically oriented technique to guide traffic demands is by manipulation of these link weights that can also be called link metrics or Interior Gateway Protocols (IGP) metrics. The higher the link weight of an edge, the higher the probability of data being routed over the respective edge. Following this approach, in a reactive manner, link weights are adapted locally whenever a certain link tends to be overloaded. In a more systematic manner, the problem has been further dealt with by applying linear integer computer programs, where the optimization targets are the minimization of the maximal link capacity usage in the network. The task of finding a globally optimal set of metrics, however, is very complex. In terms of computational complexity this task is NP-hard. This is because each link metric potentially impacts a large number of communication paths.

The linear optimization techniques applied so far quickly reach their limits when actual non-linear conditions are taken into account, like redundancies, geographical subgroups or subdomains (e.g. European network and US network considered in one model), inclusion of satellites, Quality of Service, QoS, relationships, etc. Moreover, the known techniques often lead to the problem of unused capacity usage and overloads of link capacities in communication paths within a network, where many links are close to their capacity limit.

US 2020/396154 A1 discloses methods, apparatus and computer programs for allocating traffic in a telecommunications network comprising a plurality of nodes, with pairs of nodes being connected by respective links. A method comprises obtaining a plurality of demands for connectivity between respective first nodes and respective second nodes of the telecommunications network, each demand being subject to a respective constraint associated with the connectivity between the respective first node and the respective second node; for each demand, generating a list of possible paths between the first node and the second node satisfying the constraint; based on the list of possible paths for each demand and an indication of traffic usage for each demand, determining, for each demand, weights in respect of each of the possible paths; and providing the weights to nodes of the telecommunications network, for the distribution of traffic associated with each of the plurality of demands to the possible paths in accordance with the respective weights.

The paper "Fast Embedding of Constrained Satisfaction Problem to Quantum Annealer with Minimizing Chain Length" by Juexiao Su et al. discusses solving constrained satisfaction problem (CSP) using D-Wave quantum annealer.

US 2017/286852 A1 discloses a method for determining a minimum connected dominating set in a graph, the method comprising obtaining an indication of an input graph, the input graph comprising a plurality of nodes and a plurality of edges; generating a distance table comprising for each node of the input graph, an indication of a distance between the given node and each of the other node of the plurality of nodes; generating a corresponding constrained binary quadratic programming problem using the generated distance table; providing the corresponding constrained binary quadratic programming problem to a quantum annealing solver; obtaining at least one approximate solution from the quantum annealing solver; post-processing the at least one approximate solution and providing the post-processed at least one approximate solution.

The problem of the present disclosure, therefore, lies in providing enhanced techniques that allow for an optimized utilization of communication paths within a communications network with respect to capacity limits, thereby achieving an optimized routing.

This problem is solved by a method according to claim 1. Further implementations are described in the dependent claims and in the following description.

The method is a computer-implemented procedure for optimizing a usage distribution in a communications network in which data traffic is routed, wherein the communications network has a plurality of communication nodes.

The communication nodes are connected by edges of the communications network. A series of edges yields a communication path for a routing of the data traffic. Hence, an edge of a communication path in this context describes a connection between two adjacent nodes within a communication path.

The method comprises the following steps:

- Capturing a set of traffic demands, each traffic demand specifying a transfer of a determined data volume from an origin node to a destination node among the plurality of communication nodes,

- Splitting the traffic demands into sub-demands,

- Specifying a set of optional communication paths for an individual routing of each sub-demand, wherein the edges within the set of optional communication paths are assigned a respective usage capacity limit,

- Calculating, for each sub-demand, fractional capacity usages of the edges within the set of optional communication paths, the fractional capacity usages being calculated based on the respective usage capacity limit,

- Formulating the calculated fractional capacity usages as terms of a quadratic stress function,

- Determining, by using a quantum concept processor, an optimized routing by selecting for each sub-demand one communication path from the set of optional communication paths, such that the quadratic stress function is minimized.

This method reliably tackles the problem of routing network demands in a communications network along optimized communication paths such that the overall capacity in the network is optimally used, thereby avoiding that link capacities in the network are exceeded.

By applying the method, for every given sub-demand from the traffic demands, one optimal option for a communication path from the set of optional communication paths can be selected. The selection is chosen such that the capacity of all edges (links) in used communication paths within the network is respected as upper limit for the total volume of traffic demands routed along them and that the average load of all communication paths within a network is minimum. Further, a minimization of a maximum link utilization (MLU) can be achieved.

"Traffic demands" in this context are modelled as 3-tuples, defining an origin node (source of a data stream), an end node or destination node (destination of a data stream), and the determined data traffic to be transferred between origin and destination. The focus is on providing continuous data streams over the network, which are to be modelled and routed in such a way that no data is lost during transmission by exceeding specified capacities on given transport links. Measurement for data transfer rates of such data stream requests or demands are currently specified in Gbps (Gigabit per second).

"Sub-demands" in this context are traffic demands split into fragments. Hence, one sub-demand represents a fragment of an initial traffic demand in terms of the data volume split into a determined data volume packet.

The optional communication paths in this context are in general not subject to any restrictions with regard to routing, path length or number of intermediary nodes in the network. However, the set of optional communication paths is pre-determined regarding each sub-demand that is to be transmitted through the network. In such a pre-determination useful or suitable paths can be considered in terms of latency (shortest possible paths, fewest possible IP hops), redundancy (the model should be redundant against failure of a connection), Domains (e.g. EU, US) or hierarchies (core network, access networks), etc. For example, the set of optional communication paths is a subset of possible communication paths for each traffic demand or for each respective sub-demand. The set of optional communication paths is for example stored as "path box" which can be accessed by the computer-implemented algorithm. Advantageously, as many divergent (most diverse or disjoint) paths as suitable are pre-selected in the path box to provide a sufficiently large solution space for solving the quadratic stress function, i.e. finding a (global) minimum, by the quantum concept processor. Such pre-selection can depend on the processing performance and capacity of the quantum concept processor.

Moreover, traffic demands in this context can theoretically be split into sub-demands with any even or uneven fragment size that is suitable for the practical implementation. The approach here is to split each traffic demands into a plurality of sub-demands and to find for each sub-demand an optimal communication path through the network. In this way, the approach bases on the so-called Multi Commodity Flow Routing (MCFR) which is a kind of source routing. Such splitting of the traffic demands can depend on the processing performance and capacity of the quantum concept processor.

By calculating, for each sub-demand, fractional capacity usages of the edges within the set of optional communication paths and formulating the calculated fractional capacity usages as terms of a quadratic stress function, a quadratic optimization problem can be formulated in order to deal with the complexity of the above-explained optimization problem. The application of such quadratic optimization problem has the effect that a quadratic stress function can be formulated which heavily penalizes a high capacity usage on individual edges of communication paths.

In this way, an optimized routing is determined by selecting for each sub-demand one communication path from the set of optional communication paths, such that the quadratic stress function is minimized. The minimum of the quadratic stress function preferably is a global minimum, but can also be a local minimum.

The method, hence, has the technical effect and advantage of a uniformly minimal utilization of the network and distribution of the distance to the capacity limits within the network in order to achieve a uniformly minimal utilization of the network with respect to its capacity limits.

The underlying quadratic optimization problem, as mentioned above, is very complex. This is not only due to a potential impact of one selected communication path to other communication paths and a vast amount of data traffic to be managed between a plurality of origin nodes and destination nodes in the network. The problem is also very complex because there are many practical constraints that have to be taken into account. As more constraints are implemented, such problems become more complex and difficult to solve. This is problematic or difficult, if traffic engineering solutions are needed fast, for example as a reaction to an unexpected network failure or under consideration of further practical constraints like latency (shortest possible paths, fewest possible IP hops), redundancy (the model should be redundant against failure of one or more/many edges, planned outages or maintenance of network links), Domains (EU, US) or hierarchies (core network, access networks), etc. The herein described method advantageously shows its strength compared to conventional approaches more and more, the more complex the underlying problem is. In other words, for a complex optimization problem taking into consideration practical constraints as explained above, the herein described method has a significant strength over conventional techniques.

The herein described method makes use of an approach inspired by quantum computing. The calculation of optimized solutions of the quadratic stress function for determining optimized communication paths for all sub-demands of the set of traffic demands is performed by a so-called quantum concept processor. As a quantum concept processor in the context of the present disclosure a processor is defined that solves a so called "Ising model" or the equivalent quadratic unconstrained binary problem. For example, this is a processor configured to solve an optimization problem by means of quantum annealing or quantum annealing emulation. Such a processor is for example based on conventional hardware technology, for example based on complementary metal-oxide-semiconductor (CMOS) technology. An example of such quantum concept processor is Fujitsu's digital annealer. Alternatively, any other quantum processors can be used for the herein described method, in future times also such technologies that are based on real quantum bit technologies. Further examples of such quantum concept processors are the quantum annealer of DWave (e.g. 5000Q), but also quantum gate computers (IBM, Rigetti, OpenSuperQ, IonQ or Honeywell) making use of quantum optimisation algorithms like QAOA or VQE.

In other words, a quantum concept processor as defined herein is a processor which realises the concept of minimization of a so-called quadratic unconstrained binary optimization (QUBO) function, either on a special processor classic technology, a quantum gate computer or on a quantum annealer.

In at least one implementation, the method further comprises the following steps:

- Specifying a set of path variables, wherein each path variable is associated with one of the sub-demands and one communication path from the set of optional communication paths,

- Formulating, in the quadratic stress function, path terms that connect the calculated fractional capacity usages of the edges of a respective communication path from the set of optional communication paths with the path variable associated with the respective communication path from the set of optional communication paths,

- Calculating the path terms, by using the quantum concept processor, to choose for each sub-demand one communication path from the set of optional communication paths, such that the quadratic stress function is minimized.

In this way, for each sub-demand an optimal routing between an origin node and a destination node on one selected communication path along a concatenation of connections between adjacent nodes in the network can be calculated individually. This offers an elegant implementation of a very flexible and variable routing of data traffic, in particular under consideration of the MCFR approach as explained above. Hence, different communication paths for different sub-demands (e.g. via different intermediary nodes) can be selected in order to avoid overloads or critical increase of the capacity usage at respective edges of communication paths in the network and to distribute the overall capacity usage throughout the network in an optimized manner.

The connection of calculated fractional capacity usages of the edges within optional communication paths with path variables associated with respective communication paths allows for the calculation of an optimized solution (minimum) of the quadratic stress function for all sub-demands. In this way, an optimized selection of one path out of the path box for each sub-demand can be achieved to fulfil the above-explained optimization problem. Hence, an impact of a selected communication path for one sub-demand to other possible communication paths for other sub-demands can be mitigated. This allows for a very high degree of freedom in the routing, which nevertheless is very complex to solve. An optimized selection of respective paths from the path box for all sub-demands is performed by the quantum concept processor, as explained above.

In at least one implementation of the method, the path terms are calculated under consideration of a path condition that each sub-demand is routed along exactly one communication path from the set of optional communication paths. Such path condition forms a constraint or "boundary" for the method such that each sub-demand can only be assigned to exactly one path out of the path box. This avoids undesirable solutions and guarantees that a routing of each sub-demand is sufficiently considered.

In at least one implementation of the method, the traffic demands are split into sub-demands with determined discrete data volumes. The sub-demands can each have an equal size or different sizes, depending on the implementation and practical considerations. For example, a traffic demand with a volume size of 1000 Gbit/s is split into a plurality of sub-demands with even sizes of 50 Gbit/s. Alternatively, sub-demands with different sizes are generated, wherein different sub-demands may have for example different sizes of 50, 100, and 250 Gbit/s. A splitting of the traffic demands into sub-demands with determined discrete data volumes has the effect of a practically implementable algorithmic procedure within the network and helps keeping control of stable and reliable data streams. In this way, such approach is a kind of discrete MCFR approach.

In at least one implementation of the method, the quadratic stress function is formulated under consideration of one or both of the following constraints for the set of traffic demands or for the respective sub-demands:

- organization of the communications network in different network domains,
- latency of the communications network.

By considering such constraints in the formulation of the quadratic stress function, solutions of the optimization problem can be penalized that contravene the above conditions. This enables finding suitable optimized solutions considering practical constraints of the actual network conditions of the communications network.

In at least one implementation of the method, the set of optional communication paths for an individual routing of each sub-demand is specified under consideration of one or more of the following constraints:

- one or more redundant optional communication paths associated with a sub-network of the communications network
- organization of the communications network in different network domains,
- latency of the communications network.

This has the advantageous effect that the calculation of an optimized routing can react to and compensate a failure in a zone, segment or sub-network within the communications network, consider different domains of the network and/or react to and compensate a latency in the network. This also gives further additional degrees of freedom that allow for respective sub-networks, domains and latency to be emphasized in the calculation of an optimized routing of all sub-demands. For example, certain zones or regions in the communications network can have greater significance, importance or use density than other zones or regions. This can be countered by such measures. Also, the communications network can be segmented into different sub-networks to better handle different latency requirements in this regard.

In at least one implementation of the method, the set of optional communication paths for an individual routing of each sub-demand is specified such that for topologically near origin and destination nodes a smaller number of optional communications paths is selected than for topologically distant origin and destination nodes. This has the advantage that all possible combinations and options for communication paths can be condensed to a suitable number of optional paths in the path box for each respective sub-demand. For topologically near origin and destination nodes a smaller number of optional communications paths is sufficient, whereas for topologically distant origin and destination nodes a higher number of optional communications paths is recommended. For near origin and destination nodes rather short paths are preferred, whereas for distant origin and destination nodes sufficient alternative routes or detours can be taken into account. With increasing "distance" between origin and destination nodes, hence, in each case suitable and sufficient options and alternatives can be pre-determined as optional communications paths, without over-straining the complexity of the algorithm.

In at least one implementation of the method, the quadratic stress function is formulated as a quadratic unconstrained binary optimization (QUBO) function. This QUBO function serves as "input" for the quantum concept processor that solves this optimization problem for an optimized routing of all sub-demands according to the above-explained method. Generally speaking, QUBOs are quadratic order polynomials in binary variables which are represented in a quantum concept processor as bits or quantum bits (Q-bits hereinafter). In the context of the optimization problem of the present disclosure, the QUBO function represents the sum of potential contributions of the fractional capacity usages of respective edges within optional communication paths as a function of different Q-bits, wherein each Q-bit represents the selection of a path alternative that can assume the value "0" or the value "1". In order to solve the quadratic optimization problem (quadratic stress function), the quantum concept processor runs through different settings of the different Q-bits in order to find such solution(s) that minimize the quadratic optimization problem. In this way, a QUBO representation of the optimization problem has elegant properties regarding the here applied quantum concept computing. For example, the above explained path variables are formulated in the form of such Q-bits.

In at least one implementation of the method, the quadratic stress function and the path condition, as explained above, are combined into a global QUBO function. In the global QUBO function one or more of the above-explained constraints can be considered. In this regard, one or more of the above-explained constraints can be weighted within the QUBO function as soft constraints. This has the advantage that the QUBO function can be somewhat fine-tuned depending on the focus of the optimization problem either on the optimization of the uniform capacity usage distribution throughout the network or on the fulfilment of one or more of the mentioned (soft) constraints.

The above-mentioned problem is also solved by a quantum concept processor as claimed in the enclosed claims. The quantum concept processor is configured for performing one or more steps of a method as described above. According to an exemplary implementation, the quantum concept processor is a digital annealing processing unit. This unit can be specially configured to perform quantum annealing or a quantum annealing emulation as explained above. The quantum concept processor can be of any type explained above.

Moreover, the above-mentioned problem is also solved by a computer program comprising instructions that, when the program is executed by one or more processors, cause each of the one or more processors to perform one or more steps of a method as described above. At least one of these processors is e.g. a quantum concept processor as explained above. Other processors can be configured for processing, by executing the computer program, preparatory or iterative steps of or for a method as explained above.

Moreover, the above-mentioned problem is also solved by a workplace for a network planner, configured for verifying an optimized routing determined by a method as described above. Such a workplace, for example, has verification means that are configured for an (automated or semi-automated) verification of an optimized routing determined by a method as described above. This serves a network planner to verify optimization results found by a method as described above. The verification means can be implemented in software and/or hardware. For example, the workplace can communicate or be connected to a system comprising a quantum concept processor that performs the method as described above. The results can then be taken over into the workplace.

Moreover, the above-mentioned problem is also solved by an interface arrangement comprising one or more interfaces to a plurality of communication nodes of a communications network in which data traffic is routed, wherein the interface arrangement is configured to automatically deploy an optimized routing determined by a method as described above to the communication nodes of the communications network. In this way, an optimized routing determined by a method as described above can be (automatically or semi-automatically) be deployed to a plurality of communication nodes of a respective communications network. For example, the interface arrangement can communicate or be connected to a workplace as describe above or to a system comprising a quantum concept processor that performs the method as described above. The results can then be taken over into the interface arrangement.

Moreover, as preparatory measure for one or more of the above-explained steps of the computer-implemented procedure, an interface can be implemented or used for reading out parameters from the communications network before a respective optimization and for inputting such parameters into the explained computer-implemented optimization procedure. The parameters for example comprises a network configuration, adjacency information for a graph description of the network, available capacities in the network and traffic demands to be expected.

Any aspects, features, effects and measures described alone or in combination with each other in the context of the method explained above can be applied to or find analogous representation in aspects, features, effects and measures described alone or in combination with each other in the context of the quantum concept processor or the computer program explained above, and vice versa.

The invention is further described below under consideration of several implementations with the aid of multiple drawings.

Figure 1        shows an exemplary configuration of a communications network with exemplary routings of traffic demands following a conventional approach.

Figure 2A       shows an exemplary configuration of a communications network with exemplary routings of traffic demands following an alternative approach.

Figure 2B       shows an exemplary configuration of a communications network with exemplary routings of traffic demands following an approach according to the invention.

Figure 3        shows an exemplary schematic illustration of optional communication paths for a routing of traffic demands between origin and destination nodes.

Figures 4A and 4B    show exemplary mathematical formulations of partial optimization problems following an approach according to the invention.

Figure 5    shows an exemplary schematic illustration of an algorithm performing an approach according to the invention.

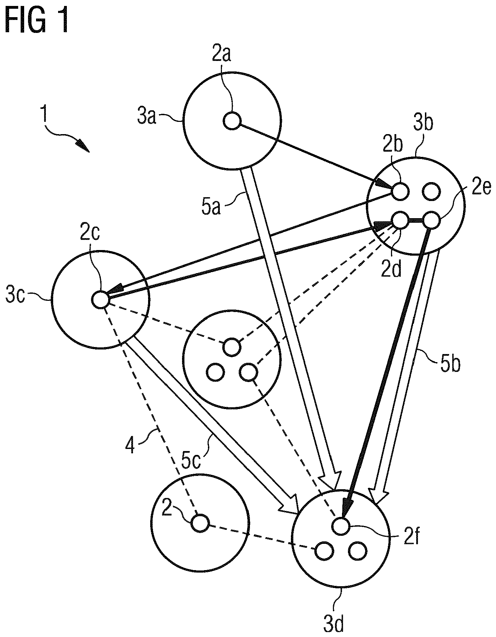

Figure 1 shows an exemplary configuration of a communications network 1 with exemplary routings of traffic demands 5a, 5b and 5c following a conventional approach. The communications network 1 comprises a plurality of communication nodes 2, wherein a connection 4 between two adjacent communication nodes 2 is called an edge. This is exemplarily illustrated between the communication node 2 and another communication node 2c, which can communicate with each other over the connection 4. Depending on the historically grown configuration and implementation of the communications network 1, several communication nodes 2 are aggregated into so-called aggregation nodes 3. As exemplarily illustrated in Figure 1, the communication node 2a is aggregated within aggregation node 3a, whereas other communication nodes 2b, 2d and 2e are aggregated in the aggregation node 3b, for example.

The communication nodes 2 are for example so-called label edge routers (LER) for routing incoming and outgoing data traffic within the network 1. The aggregation nodes 3 are called Meta nodes and are aggregation zones of LERs in a certain region of the network 1. For example, the aggregation nodes 3 are centralized aggregation zones of determined economic areas or cities between which a communication shall take place. In other applications, the aggregation nodes 3 can for example be entities of an industry network or of a traffic network, etc.

The communication network 1, in general, is part-mashed. This means that not all of the communication nodes 2 are connected or connectable with all other communication nodes 2. Instead, there are only several connections 4 (see dotted connections) between several communication nodes 2 implemented in the network 1, which, for example, came from historical evolution of the network 1. The connections 4 between respective communication nodes 2 are for example implemented by fibre optic connections. However, other technologies like radio technologies (e.g. 5G) or copper/DSL technologies are applicable as well, in general.

As explained above, Figure 1 illustrates a certain scenario of traffic demands 5a, 5b and 5c, according to which certain data volumes have to be transferred between respective communication nodes 2 within the network 1. As exemplarily illustrated, a first traffic demand 5a is between the communication node 2a within aggregation node 3a and another communication node 2f within aggregation node 3d. A second traffic demand 5b is between a communication node 2e within aggregation node 3b and again communication node 2f within aggregation node 3d. A third traffic demand 5c is between the communication node 2c within aggregation node 3c and again communication node 2f within aggregation node 3d. Each traffic demand 5a, 5b and 5c, hence, defines a determined volume to be transferred from an origin node to a destination node. In the exemplary scenario according to Figure 1 the origin node for traffic demand 5a is the communication node 2a, whereas the destination node for the traffic demand 5a is the communication node 2f. Analogously, for traffic demand 5b the origin node is communication node 2e and the destination node is communication node 2f. Further analogously, for traffic demand 5c the origin node is communication node 2c and the destination node is again communication node 2f.

In an alternative implementation, traffic demands can be defined as demands between aggregation nodes 3, irrespective on which internal communication node 2 within a respective aggregation node 3 the communication starts or ends. For example, the demands 5a, 5b and 5c can be defined as demands between the aggregation nodes 3a and 3d (demand 5a), aggregation nodes 3b and 3d (demand 5b) and aggregation nodes 3c and 3d (demand 5c). In such implementation, there is a "virtual" edge between the respective aggregation node and its internal communication nodes, wherein the virtual edge has a very high capacity. This leads to the effect that it does not play a significant role, on which internal communication node 2 within a respective aggregation node 3 the communication starts or ends.

Each traffic demand 5a, 5b and 5c burdens the network 1 with a usage of the network's capacity, i.e. the capacity of respective connections 4 of potential communication paths between the respective communication nodes 2 in the network 1. In the exemplary scenario of Figure 1 the traffic demand 5a is transferred from communication node 2a to communication node 2f via the communication nodes 2b, 2c, 2d, 2e, and 2f. In parallel, the traffic demand 5b is transferred simply over the connection 4 between the communication nodes 2e and 2f. Moreover, the traffic demand 5c is transferred from communication node 2c to communication node 2f via the communication nodes 2d, 2e, and 2f. In this scenario, mainly two drawbacks occur. A first drawback lies in the communication paths for the transfer of the traffic demands 5a and 5c being long and rather complicated paths through the network 1. These transfers embed a plurality of communication nodes 2 and connections 4 in the network 1 for transferring the traffic demands 5a and 5c, which can have significant impact on other transfers in the network. A second drawback lies in the fact that all three traffic demands 5a to 5c are finally transferred over the connection 4 between the communication nodes 2e and 2f. Hence the link capacity of the connection 4 between the nodes 2e and 2f is loaded to a significant extent. This may lead to a failure or an overload of the connection 4 between nodes 2e and 2f, resulting in increased latency or loss of data, etc.

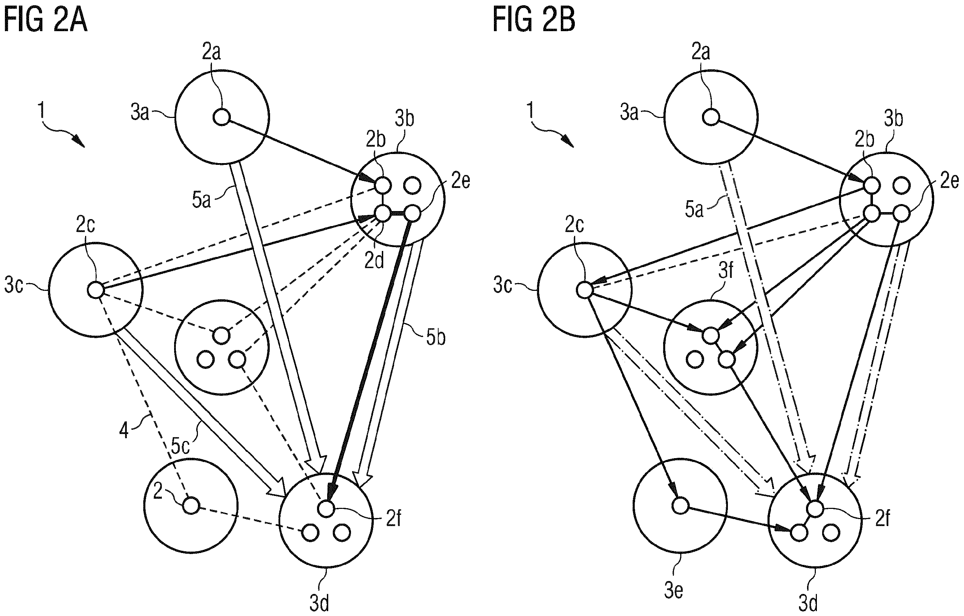

Figure 2A shows an exemplary configuration of the communications network 1 with exemplary routings of traffic demands 5a, 5b and 5c (see above) following an alternative approach. In the scenario according to Figure 2A, for the traffic demand 5a an alternative path is chosen such that traffic demand 5a is transferred on an alternative communication path starting again in communication node 2a and following the communication nodes 2b, 2d, 2e and 2f. The alternative path is, for example, selected by manipulation of link weights of connections 4 in the network 1.

The scenario according to Figure 2A has the advantage over the scenario of Figure 1 that the communication path for the transfer of the traffic demand 5a has become closer to a short path strategy, thereby keeping the number of involved communication nodes 2 and connections 4 in the network 1 low (at least lower than in the scenario of Figure 1) in order to reduce the impact on other transfers. However, also in the scenario of Figure 2A the other drawback remains, according to which the connection 4 between the nodes 2e and 2f is still heavily loaded with all three traffic demands 5a to 5c going over this connection of the network 1.

Figure 2B shows an exemplary configuration of the communications network 1 according to Figures 1 and 2A, but now with exemplary routings of the traffic demands 5a to 5c following an approach according to the invention. In the scenario of Figure 2B a plurality of optimized communication paths regarding the data volumes of all three traffic demands 5a to 5c are selected. In this regard, the traffic demands 5a to 5c all have been split into a plurality of sub-demands, each sub-demand representing a discrete fragment of the data volume of an associated one of the traffic demands 5a to 5c. This is illustrated in Figure 2B with the traffic demands 5a to 5c being only indicated by dashed arrows. Hence, according to the implementation of Figure 2B, for each traffic demand 5a to 5c there is not only one single prescribed path, but a plurality of (different and separate) paths regarding each sub-demand of each traffic demand 5a to 5c.

The scenario according to Figure 2B, hence, transfers the overall data volumes of the traffic demands 5a to 5c split into a plurality of fragments (sub-demands) on very different communication paths from respective origins to respective destinations through the network. This approach, hence, follows a discrete MCFR approach. The real value of the scenario according to Figure 2B lies in the fact that the overall data volume of all traffic demands 5a to 5c, is distributed throughout the network, thereby avoiding that significant load is transferred over single segments in the network which can heavily burden single connections 4 in the network.

Hence, the scenario of Figure 2B solves the drawbacks of the approaches according to Figures 1 and 2A, thereby achieving a reduced impact and influence between transfers of different traffic demands 5a to 5c as best as possible together with a uniform and optimized distribution of the overall capacity usage of the connections 4 in the network 1 for all traffic demands 5 that have to be transferred in the network 1.

In the following, the implementation of the approach according to Figure 2B is further explained in detail.

The optimization problem to be solved lies in determining an optimized routing through the network 1 by selecting for each sub-demand as fragment of a respective traffic demand 5 one communication path from a set of optional communication paths, such that a mathematically formulated quadratic stress function (core optimization problem) is minimized. This serves the purpose of choosing for all sub-demands of all traffic demands 5 in the network 1 respective communication paths with the effect that the overall capacity usage of connections 4 within the network 1 can be uniformly minimized over the network 1. This avoids connections 4 to be heavily burdened or overloaded, whereas a minor load of other connections 4 could lead to significantly lower such stress.

In order to achieve the above advantageous effect, a computer-implemented algorithmic method for optimizing the routing within the communication network 1 is implemented. This is explained in the following.

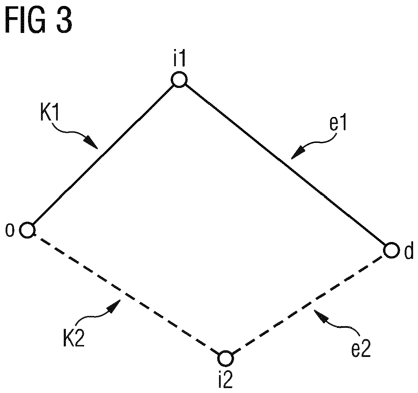

Figure 3 shows a schematic illustration of optional communication paths k1 and k2 for a routing of fragments (sub-demands) of traffic demands between an origin node o and a destination node d. Determined data volume packets of a plurality of sub-demands (into which a traffic demand o, d is split) are to be transferred between o and d. The core optimization problem now lies in choosing and determining optimally distributed communication paths for all sub-demands between o and d such that an overall capacity usage of connections within optional communication paths are minimized such that the overall usage of the capacities in the network is uniformly minimized within the network.

According to Figure 3, the set of optional communication paths k1 and k2 is specified in advance. This can be done through application of any suitable path planning algorithm that calculates optional communication paths between the origin node o and destination node d for each sub-demand to be transferred. As exemplarily illustrated in Figure 3, path k1 goes from o over an intermediate node i1 to d. Path k2 goes from o over another intermediate node i2 to d. These are optional communication paths for a routing of data traffic included in each sub-demand between the origin o towards the destination d. The planned paths k1, k2 can be stored in advance in the form of a path box that can be accessed by the algorithm for selecting for each sub-demand one path out of the path box.

Figure 3 further illustrates two exemplary connections that are further referenced to as edges e1 and e2 and that lie in the optional communication paths k1, k2. The edge e1 is configured between the intermediate node i1 and the destination d, whereas the edge e2 is configured between the intermediate node i2 and the destination d.

Let's exemplarily assume, based on the path box k1, k2, different options for a routing of two sub-demands between the origin o and the destination d. One option for the routing per sub-demand is path k1 such that the data traffic is transferred over edge e1. The other option for the routing per sub-demand is path k2 such that the data traffic is transferred over edge e2. As can be seen from these different options for a routing of the data traffic per sub-demand, there are combinations of communication paths for each of the two sub-demands, wherein the two edges e1 and e2 each are burdened with one sub-demand only. This is, for example, given with one sub-demand going path k1 and the other sub-demand going path k2. However, there are also possible combinations of communication paths wherein one of the edges e1 and e2 is significantly and heavily loaded with both sub-demands, whereas the other of the two edges e1 and e2 is not used at all. This is given with both sub-demands going the same path k1 or k2.

The latter combinations have the significant drawback that the capacity usage of one of the edges e1 and e2 is significantly higher, which may result in an overload or failure of the respective edge. Hence, the optimization problem lies in determining and selecting distributed communication paths for all sub-demands between o and d such that the overall capacity usage is distributed over both edges e1 and e2.

For solving this optimization problem, fractional capacity usages of all edges within the set of the optional communication paths k1, k2 are calculated for the whole set of sub-demands into which all traffic demands are split. As exemplarily given in Figure 3, such measure includes the calculation of fractional capacity usages of each of the edges e1 and e2 for each of the sub-demands between o and d. "Fractional capacity usages" of the respective edges means that based on the respective usage capacity limit of each edge, the fraction of the capacity usage is calculated that is required for each sub-demand to be transmitted over this edge.

For example, with regard to Figure 3, let's assume that each sub-demand between o and d requires half of the maximum usage capacity of each edge e1 and e2 (i.e. 50% of the capacity) when passing over the respective edge. This means that an edge e1 and e2 is burdened with half of its usage capacity for each sub-demand between o and d when the respective sub-demand passes over the respective edge. In other words, if one sub-demand goes over path k1 and the other sub-demand goes over path k2, the edges e1 and e2 both are burdened with 50% of their usage capacity limit. Otherwise, if both sub-demands go over one and the same path k1 or k2, then the respective edge e1 (for k1) or e2 (for k2) is fully and completely burdened (2x50% = 100%), thereby reaching its capacity limit, resulting in a utilization of the entire edge capacity.

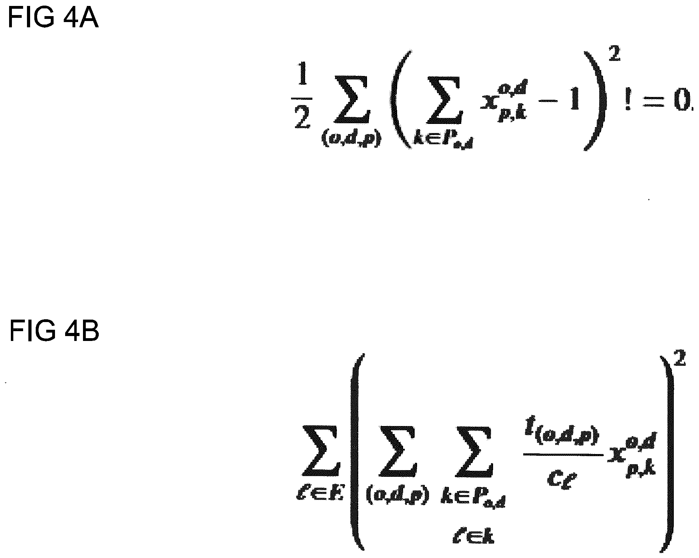

Such calculations of fractional capacity usages are performed for all remaining edges lying within the optional communication paths k1 and k2 in the scenario of Figure 3. The calculated fractional capacity usages are then formulated as terms of a quadratic stress function which is further explained in detail below and in view of Figure 4B.

Figures 4A and 4B show exemplary mathematical formulations of partial optimization problems following the approach as explained above with regard to the Figures 2B and 3. The mathematical formulations of Figures 4A and 4B are represented as so-called Hamiltonian functions, short Hamiltonians.

The mathematical formulation of Figure 4A formulates a path condition according to which each sub-demand between respective origins and destinations (o, d) is to be routed along exactly one path k out of the path box P (k E P). This means for the scenario of Figure 3 that each sub-demand between o and d either goes over k1 or over k2.

The mathematical formulation in Figure 4A is formulated as summed terms of binary variables $x_{p,k}^{o,d}$ that can assume the value "0" or the value "1" (or both with a certain probability) and are represented in a quantum concept processor as bits (or Q-bits as used hereinafter). For each optional path k E P and considering each sub-demand with the packet size p from an origin o to a destination d, a respective Q-bit $x_{p,k}^{o,d}$ can be set as path variable. The respective Q-bit $x_{p,k}^{o,d}$ is set to the value "1" if a respective sub-demand goes over the respective communication path k, and set to the value "0", if not. Considering the formulation of the Hamiltonian of Figure 4A, the Hamiltonian must be equal to "0". This is only fulfilled if for each sub-demand p exactly one path k 6 P is chosen such that only one path variable $x_{p,k}^{o,d}$ assumes the value "1" and all other path variables $x_{p,k}^{o,d}$ for other paths have the value "0". Otherwise, if none or more than one path k would be chosen, the condition in Figure 4A would not be fulfilled. The path condition, mathematically formulated as Hamiltonian in Figure 4A has the effect that exactly one communication path k must be chosen for each sub-demand p in order to consider this sub-demand p for the overall calculation of an optimized routing of all sub-demands in the network.

The mathematical formulation of the Hamiltonian according to Figure 4B represents the core optimization problem that is formulated as a quadratic stress function taking into account the calculated fractional capacity usages of the edges e out of all edges E in the network (e E E), the edges e lying within the set of optional communication paths k 6 P for all traffic demands o, d. Hence, the core optimization problem here lies in minimizing the Hamiltonian according to Figure 4B in order to find optimized communication paths for all sub-demands p to be transmitted within the network.

Assuming that the expression in Figure 4A is satisfied, the Hamiltonian of Figure 4B considers summed terms for each edge e within an optional communication path k considering all sub-demands p between all origins o and destinations d. Thus, the QUBO of Figure 4B then sums all calculated fractional capacity usages $t_{(o,d,p)}/c_e$ of all edges e that are part of optional communication paths k. $t_{(o,d,p)}$ here represents the volume of a respective sub-demand p and $c_e$ represents the capacity of the respective edge e. The fractional capacity usages $t_{(o,d,p)}/c_e$ are connected with the respective Q-bits (path variables) $x_{p,k}^{o,d}$ into path terms. As explained above, the Q-bits $x_{p,k}^{o,d}$ can assume either the value "0" or the value "1" depending on whether an optional path associated with a respective Q-bit $x_{p,k}^{o,d}$ is taken into account or not.

Considering the scenario of Figure 3 for two sub-demands p1, p2 and the two edges e1 and 2 exemplary, the Hamiltonian according to Figure 4B may have the following expression:

$$\left(\frac{t_{(o,d,p1)}}{c_{e1}} \cdot x_{p1,k1}^{o,d} + \frac{t_{(o,d,p2)}}{c_{e1}} \cdot x_{p2,k1}^{o,d}\right)^2 + \left(\frac{t_{(o,d,p1)}}{c_{e2}} \cdot x_{p1,k2}^{o,d} + \frac{t_{(o,d,p2)}}{c_{e2}} \cdot x_{p2,k2}^{o,d}\right)^2$$

Under the assumption that each sub-demand p1, p2 burdens a respective edge e1, e2 with half of its capacity (50%), as explained above, the above term reaches a minimum, if p1 and p2 are routed over different paths k1, k2. Then, the above term is:

$$\left(\frac{1}{2}\right)^2 + \left(\frac{1}{2}\right)^2 = \frac{1}{2}.$$

Otherwise, if p1 and p2 are routed over one common path k1 or k2 (and the other path is not used), the above term is:

$$\left(\frac{1}{2} + \frac{1}{2}\right)^2 = 1.$$

Hence, the costs/stress for the network is higher in the latter solution, which is worse over the above solution.

The above example shows that a choice of different paths k1, k2 for the two sub-demands p1, p2 is the preferred solution for achieving the optimization target of a distribution of the overall capacity usage throughout the network.

The Hamiltonian of Figure 4B is generally solved for all sub-demands in a network by a quantum concept processor that runs through different settings of values for the respective Q-bits $x_{p,k}^{o,d}$, thereby calculating the respective result of the Hamiltonian. The target of doing so is to find the minimum of the Hamiltonian for respectively set values of Q-bits $x_{p,k}^{o,d}$. As soon as a respective minimum of the Hamiltonian of Figure 4B is found, the respective values of the Q-bits $x_{p,k}^{o,d}$ leading to this minimum are stored and finally define respective communication paths of respective sub-demands. This is due to the fact that each Q-bit $x_{p,k}^{o,d}$ defines one communication path for each sub-demand p as explained above. Hence, by calculating a minimum of the Hamiltonian of Figure 4B by using a quantum concept processor, an optimized routing is calculated by selecting for each sub-demand p one communication path k from the set of optional communication paths.

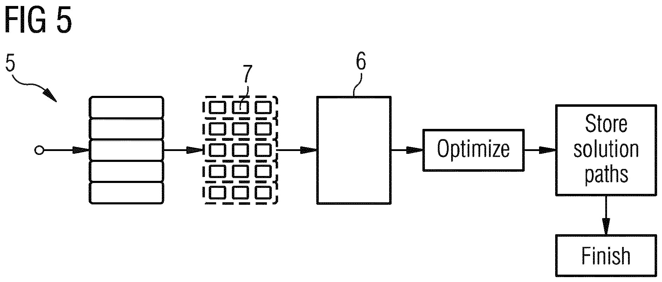

Figure 5 shows an exemplary schematic illustration of an algorithm performing the approach as explained above. Figure 5 shows the processing of the above explained method steps and procedure considering the set of traffic demands 5. The traffic demands 5 each are split into respective sub-demands 7 with a determined discrete packet size.

The pre-processed sub-demands 7 are then input to an algorithmic procedure within the quantum concept processor 6. For example, the quantum concept processor 6 according to Figure 5 is configured to solve the optimization problem by means of quantum annealing emulation. The quantum concept processor 6 applies the mathematical formulation of the overall optimization problem according to Figures 4A and 4B. The quantum concept processor 6 then calculates for the sub-demands 7 an optimized routing solution of the optimization problem according to Figure 4B under consideration of the constraint according to Figure 4A.

After the algorithmic procedure is completed, the finally calculated minimum of the optimization problem according to Figure 4B is then output from the quantum concept processor 6 for the respective sub-demands 7. The determined communication paths k according to the found optimum of the optimization problem are then stored for the sub-demands 7. The algorithm is then finished.

Hence, by applying a computer-implemented algorithmic procedure according to Figure 5, which bases on the implementations and explanations above with regard to Figures 2B to 4B, an optimized routing can be provided for all sub-demands of all traffic demands over individually selected communication paths through a communication network 1.

The formulation of the optimization problem as QUBO representation has elegant properties regarding the here applied quantum concept computing within processor 6. Nowadays, quantum concept computing still reaches significant limits. However, with computer science more and more developing towards quantum computing, the herein described approach can be further enhanced and developed in future. For example, when quantum computing is more and more applicable for increasing complexities of underlying optimization problems, path boxes can have more and more alternative options for communication paths, since more and more path variables can be calculated through quantum computing. Moreover, with quantum computing be more and more applicable, a more and more increasing number of Qbits, more and more complex optimization problems and/or more and more non-linear constraints can be taken into consideration by the approach explained herein.

The herein explained approach is primarily applicable to communication networks. However, the approach can also be applied to any other networks, like railway networks, energy grids, traffic networks, etc. in which certain "traffic" or "load" has to be transmitted throughout the network over optimized paths.

The embodiments illustrated and explained herein are merely exemplary.

List of reference signs

| | |
|---|---|
| 1 | communications network |
| 2, 2a-2f | communication nodes |
| 3, 3a-3f | aggregation nodes |
| 4 | connections between adjacent nodes |
| 5 | set of traffic demands |
| 5a-5c | traffic demands |
| 6 | quantum concept processor |
| 7 | sub-demands |
| d | destination node |
| e, e1, e2 | edges |
| i1, i2 | intermediary nodes |
| o | origin node |
| p | sub-demands with certain size p |
| k, k1, k2 | potential communication paths |

**Claims**

1. Computer-implemented method for optimizing a usage distribution in a communications network (1) in which data traffic is routed, wherein the communications network (1) has a plurality of communication nodes (2) which are connectable over edges (4) of communication paths for a routing of the data traffic, wherein the method comprises the following steps:

   - Capturing a set of traffic demands (5), each traffic demand (5a-5c) specifying a transfer of a determined data volume from an origin node (o) to a destination node (d) among the plurality of communication nodes (2),
   - Splitting the traffic demands (5a-5c) into sub-demands (7, p),
   - Specifying a set of optional communication paths (k) for an individual routing of each sub-demand (7, p), wherein the edges (e) within the set of optional communication paths (k) are assigned a respective usage capacity limit,

- Calculating, for each sub-demand (7, p), fractional capacity usages of the edges (e) within the set of optional communication paths (k), the fractional capacity usages being calculated based on the respective usage capacity limit,

- Formulating the calculated fractional capacity usages as terms of a quadratic stress function,

- Determining, by using a quantum concept processor (6), an optimized routing by selecting for each sub-demand (7, p) one communication path (k1, k2) from the set of optional communication paths (k), such that the quadratic stress function is minimized.

2. The method according to claim 1, further comprising the following steps:

- Specifying a set of path variables, wherein each path variable is associated with one of the sub-demands (7, p) and one communication path (k1, k2) from the set of optional communication paths (k),

- Formulating, in the quadratic stress function, path terms that connect the calculated fractional capacity usages of the edges (e) of a respective communication path (k1, k2) from the set of optional communication paths (k) with the path variable associated with the respective communication path (k1, k2) from the set of optional communication paths (k),

- Calculating the path terms, by using the quantum concept processor (6), to choose for each sub-demand (7, p) one communication path (k1, k2) from the set of optional communication paths (k), such that the quadratic stress function is minimized.

3. The method according to claim 2, wherein the path terms are calculated under consideration of a path condition that each sub-demand (7, p) is routed along exactly one communication path (k1, k2) from the set of optional communication paths (k).

4. The method according to any of claims 1 to 3, wherein the traffic demands (5) are split into sub-demands (7, p) with determined discrete data volumes.

5. The method according to any of claims 1 to 4, wherein the quadratic stress function is formulated under consideration of one or both of the following constraints for the set of traffic demands (5) or for the respective sub-demands (7, p):

- organization of the communications network (1) in different network domains,
- latency of the communications network (1).

6. The method according to any of claims 1 to 5, wherein the set of optional communication paths (k) for an individual routing of each sub-demand (7, p) is specified under consideration of one or more of the following constraints:

- one or more redundant optional communication paths (k) associated with a sub-network of the communications network (1),
- organization of the communications network (1) in different network domains,
- latency of the communications network (1).

7. The method according to any of claims 1 to 6, wherein the set of optional communication paths (k) for an individual routing of each sub-demand (7, p) is specified such that for topologically near origin and destination nodes (o, d) a smaller number of optional communications paths (k) is selected than for topologically distant origin and destination nodes (o, d).

8. The method according to any of claims 1 to 7, wherein the quadratic stress function is formulated as a quadratic unconstrained binary optimization (QUBO) function.

9. A quantum concept processor (6), in particular a digital annealing processing unit or a quantum annealing processing unit, configured for performing one or more steps of a method according to any of claims 1 to 8.

10. A computer program, the computer program comprising instructions that, when the program is executed by one or more processors, cause each of the one or more processors to perform one or more steps of a method according to any of claims 1 to 8.

11. A computer-readable storage medium on which the computer program of claim 10 is stored.

**12.** A system for a network planner, the workplace system comprising verification means implemented in hardware or software, configured for verifying an optimized routing determined by a method according to any of claims 1 to 8.

**13.** An interface arrangement comprising one or more interfaces to a plurality of communication nodes (2) of a communications network (1) in which data traffic is routed, wherein the interface arrangement is configured to automatically deploy an optimized routing determined by a method according to any of claims 1 to 8 to the communication nodes (2) of the communications network (1).

**Patentansprüche**

**1.** Computerimplementiertes Verfahren zur Optimierung einer Nutzungsverteilung in einem Kommunikationsnetz (1), in dem Datenverkehr geleitet wird, wobei das Kommunikationsnetz (1) eine Vielzahl von Kommunikationsknoten (2) aufweist, die für eine Leitweglenkung des Datenverkehrs über Kanten (4) von Kommunikationspfaden verbindbar sind, wobei das Verfahren die folgenden Schritte umfasst:

- Erfassen eines Satzes von Verkehrsanforderungen (5), wobei jede Verkehrsanforderung (5a-5c) eine Übertragung eines bestimmten Datenvolumens von einem Ursprungsknoten (o) an einen Zielknoten (d) unter der Vielzahl von Kommunikationsknoten (2) angibt,
- Aufteilen der Verkehrsanforderungen (5a-5c) in Teilanforderungen (7, p),
- Angeben eines Satzes von optionalen Kommunikationspfaden (k) für eine individuelle Leitweglenkung jeder Teilanforderung (7, p), wobei den Kanten (e) innerhalb des Satzes von optionalen Kommunikationspfaden (k) eine jeweilige Nutzungskapazitätsgrenze zugeordnet ist,
- Berechnen, für jede Teilanforderung (7, p), von fraktionellen Kapazitätsnutzungen der Kanten (e) innerhalb des Satzes von optionalen Kommunikationspfaden (k), wobei die fraktionellen Kapazitätsnutzungen auf der Grundlage der jeweiligen Nutzungskapazitätsgrenze berechnet werden,
- Formulieren der berechneten fraktionellen Kapazitätsnutzungen als Terme einer quadratischen Belastungsfunktion,
- Bestimmen, mithilfe eines Quantenkonzept-Prozessors (6), einer optimierten Leitweglenkung durch Auswählen, für jede Teilanforderung (7, p), eines Kommunikationspfades (k1, k2) aus dem Satz von optionalen Kommunikationspfaden (k), derart, dass die quadratische Belastungsfunktion minimiert ist.

**2.** Verfahren nach Anspruch 1, darüber hinaus die folgenden Schritte umfassend:

- Angeben eines Satzes von Pfadvariablen, wobei jede Pfadvariable einer der Teilanforderungen (7, p) und einem Kommunikationspfad (k1, k2) aus dem Satz von optionalen Kommunikationspfaden (k) zugeordnet ist,
- Formulieren, in der quadratischen Belastungsfunktion, von Pfadtermen, welche die berechneten fraktionellen Kapazitätsnutzungen der Kanten (e) eines jeweiligen Kommunikationspfades (k1, k2) aus dem Satz von optionalen Kommunikationspfaden (k) mit der Pfadvariablen verbinden, die dem jeweiligen Kommunikationspfad (k1, k2) aus dem Satz von optionalen Kommunikationspfaden (k) zugeordnet ist,
- Berechnen der Pfadterme mithilfe des Quantenkonzept-Prozessors (6), um für jede Teilanforderung (7, p) einen Kommunikationspfad (k1, k2) aus dem Satz von optionalen Kommunikationspfaden (k) zu wählen, derart, dass die quadratische Belastungsfunktion minimiert ist.

**3.** Verfahren nach Anspruch 2, wobei die Pfadterme unter Berücksichtigung einer Pfadbedingung berechnet werden, dass jede Teilanforderung (7, p) entlang genau einem Kommunikationspfad (k1, k2) aus dem Satz von optionalen Kommunikationspfaden (k) geleitet wird.

**4.** Verfahren nach einem der Ansprüche 1 bis 3, wobei die Verkehrsanforderungen (5) in Teilanforderungen (7, p) mit bestimmten diskreten Datenvolumina aufgeteilt werden.

**5.** Verfahren nach einem der Ansprüche 1 bis 4, wobei die quadratische Belastungsfunktion unter Berücksichtigung einer oder beider der folgenden Randbedingungen für den Satz von Verkehrsanforderungen (5) oder für die jeweiligen Teilanforderungen (7, p) formuliert wird:

- Organisation des Kommunikationsnetzes (1) in verschiedene Netzbereiche,
- Latenz des Kommunikationsnetzes (1).

**6.** Verfahren nach einem der Ansprüche 1 bis 5, wobei der Satz von optionalen Kommunikationspfaden (k) für eine individuelle Leitweglenkung jeder Teilanforderung (7, p) unter Berücksichtigung von einer oder mehreren der folgenden Randbedingungen angegeben wird:

    - ein oder mehrere redundante optionale Kommunikationspfade (k), die einem Teilnetz des Kommunikationsnetzes (1) zugeordnet sind,
    - Organisation des Kommunikationsnetzes (1) in verschiedene Netzbereiche,
    - Latenz des Kommunikationsnetzes (1).

**7.** Verfahren nach einem der Ansprüche 1 bis 6, wobei der Satz von optionalen Kommunikationspfaden (k) für eine individuelle Leitweglenkung jeder Teilanforderung (7, p) so angegeben wird, dass für topologisch nahe Ursprungs- und Zielknoten (o, d) eine kleinere Anzahl von optionalen Kommunikationspfaden (k) ausgewählt wird als für topologisch entfernte Ursprungs- und Zielknoten (o, d).

**8.** Verfahren nach einem der Ansprüche 1 bis 7, wobei die quadratische Belastungsfunktion als eine quadratische binäre Optimierungsfunktion ohne Randbedingungen (QUBO) formuliert ist.

**9.** Quantenkonzept-Prozessor (6), insbesondere eine digitale Annealing-Verarbeitungseinheit oder eine Quanten-Annealing-Verarbeitungseinheit, die dafür ausgelegt ist, einen oder mehrere Schritte eines Verfahrens nach einem der Ansprüche 1 bis 8 durchzuführen.

**10.** Computerprogramm, wobei das Computerprogramm Anweisungen umfasst, die, wenn das Programm von einem oder mehreren Prozessoren ausgeführt wird, jeden des einen oder der mehreren Prozessoren dazu veranlassen, einen oder mehrere Schritte eines Verfahrens nach einem der Ansprüche 1 bis 8 durchzuführen.

**11.** Computerlesbares Speichermedium, auf dem das Computerprogramm nach Anspruch 10 gespeichert ist.

**12.** System für einen Netzplaner, wobei das Arbeitsplatzsystem Prüfmittel aufweist, die in Hardware oder Software implementiert sind, das dafür ausgelegt ist, eine optimierte Leitweglenkung zu prüfen, die durch ein Verfahren nach einem der Ansprüche 1 bis 8 bestimmt wird.

**13.** Schnittstellenanordnung mit einer oder mehreren Schnittstellen zu einer Vielzahl von Kommunikationsknoten (2) eines Kommunikationsnetzes (1), in dem Datenverkehr geleitet wird, wobei die Schnittstellenanordnung dafür ausgelegt ist, eine durch ein Verfahren nach einem der Ansprüche 1 bis 8 bestimmte optimierte Leitweglenkung automatisch an den Kommunikationsknoten (2) des Kommunikationsnetzes (1) zum Einsatz zu bringen.

## Revendications

**1.** Procédé implémenté par ordinateur, destiné à optimiser une distribution d'utilisation dans un réseau de communication (1) dans lequel un trafic de données est routé, sachant que le réseau de communication (1) présente une pluralité de noeuds de communication (2) qui sont connectables via des arêtes (4) de chemins de communication pour un routage du trafic de données, sachant que le procédé comprend les étapes suivantes :

    - capture d'un ensemble de demandes de trafic (5), chaque demande de trafic (5a-5c) spécifiant un transfert d'un volume de données déterminé depuis un noeud d'origine (o) à un noeud de destination (d) parmi la pluralité de noeuds de communication (2),
    - division des demandes de trafic (5a-5c) en sous-demandes (7, p),
    - spécification d'un ensemble de chemins de communication (k) optionnels pour un routage individuel de chaque sous-demande (7, p), sachant qu'une limite de capacité d'utilisation respective est assignée aux arêtes (e) au sein de l'ensemble de chemins de communication (k) optionnels,
    - calcul, pour chaque sous-demande (7, p), d'utilisations de capacité fractionnelles des arêtes (e) au sein de l'ensemble de chemins de communication (k) optionnels, les utilisations de capacité fractionnelles étant calculées sur la base de la limite de capacité d'utilisation respective,
    - formulation des utilisations de capacité fractionnelles calculées comme termes d'une fonction de contrainte quadratique,
    - détermination, moyennant un processeur de type quantique (6), d'un routage optimisé en sélectionnant, pour chaque sous-demande (7, p), un chemin de communication (k1, k2) parmi l'ensemble de chemins de communication (k) optionnels, de telle sorte que la fonction de contrainte quadratique soit minimisée.

2. Le procédé selon la revendication 1, comprenant en outre les étapes suivantes :

- spécification d'un ensemble de variables de chemin, sachant que chaque variable de chemin est associée avec une des sous-demandes (7, p) et un chemin de communication (k1, k2) parmi l'ensemble de chemins de communication (k) optionnels,
- formulation, dans la fonction de contrainte quadratique, de termes de chemin qui connectent les utilisations de capacité fractionnelles calculées des arêtes (e) d'un chemin de communication (k1, k2) respectif parmi l'ensemble de chemins de communication (k) optionnels avec la variable de chemin associée avec le chemin de communication (k1, k2) respectif parmi l'ensemble de chemins de communication (k) optionnels,
- calcul des termes de chemin, moyennant le processeur de type quantique (6), pour choisir, pour chaque sous-demande (7, p), un chemin de communication (k1, k2) parmi l'ensemble de chemins de communication (k) optionnels, de telle sorte que la fonction de contrainte quadratique soit minimisée.

3. Le procédé selon la revendication 2, sachant que les termes de chemin sont calculés compte tenu d'une condition de chemin que chaque sous-demande (7, p) soit routée le long d'exactement un chemin de communication (k1, k2) parmi l'ensemble de chemins de communication (k) optionnels.

4. Le procédé selon l'une quelconque des revendications 1 à 3, sachant que les demandes de trafic (5) sont divisées en sous-demandes (7, p) avec des volumes de données discrets déterminés.

5. Le procédé selon l'une quelconque des revendications 1 à 4, sachant que la fonction de contrainte quadratique est formulée compte tenu d'une ou des deux des contraintes suivantes pour l'ensemble de demandes de trafic (5) ou pour les sous-demandes (7, p) respectives :

- organisation du réseau de communication (1) en différents domaines de réseau,
- latence du réseau de communication (1).

6. Le procédé selon l'une quelconque des revendications 1 à 5, sachant que l'ensemble de chemins de communication (k) optionnels pour un routage individuel de chaque sous-demande (7, p) est spécifié compte tenu d'une ou de plusieurs des contraintes suivantes :

- un ou plusieurs chemins de communication (k) optionnels redondants associés avec un sous-réseau du réseau de communication (1),
- organisation du réseau de communication (1) en différents domaines de réseau,
- latence du réseau de communication (1).

7. Le procédé selon l'une quelconque des revendications 1 à 6, sachant que l'ensemble de chemins de communication (k) optionnels pour un routage individuel de chaque sous-demande (7, p) est spécifié de telle sorte que, pour des noeuds d'origine et de destination (o, d) topologiquement proches, un nombre plus petit de chemins de communication (k) optionnels soit sélectionné que pour des noeuds d'origine et de destination (o, d) topologiquement distants.

8. Le procédé selon l'une quelconque des revendications 1 à 7, sachant que la fonction de contrainte quadratique est formulée comme une fonction d'optimisation binaire quadratique sans contrainte (QUBO).

9. Processeur de type quantique (6), en particulier une unité de traitement de recuit numérique ou une unité de traitement de recuit quantique, configuré pour effectuer une ou plusieurs étapes d'un procédé selon l'une quelconque des revendications 1 à 8.

10. Programme informatique, le programme informatique comprenant des instructions qui, lorsque le programme est exécuté par un ou plusieurs processeurs, font effectuer à chacun de l'un ou des plusieurs processeurs une ou plusieurs étapes d'un procédé selon l'une quelconque des revendications 1 à 8.

11. Support de stockage lisible par ordinateur sur lequel le programme informatique de la revendication 10 est stocké.

12. Système pour un planificateur de réseau, le système de poste de travail comprenant des moyens de vérification implémentés dans un matériel ou un logiciel, configuré pour vérifier un routage optimisé déterminé par un procédé selon l'une quelconque des revendications 1 à 8.

**13.** Agencement d'interface comprenant une ou plusieurs interfaces à une pluralité de noeuds de communication (2) d'un réseau de communication (1) dans lequel un trafic de données est routé, sachant que l'agencement d'interface est configuré pour déployer automatiquement un routage optimisé déterminé par un procédé selon l'une quelconque des revendications 1 à 8 vers les noeuds de communication (2) du réseau de communication (1).

# FIG 1

FIG 2A

FIG 2B

FIG 3

FIG 4A

$$\frac{1}{2} \sum_{(o,d,p)} \left( \sum_{k \in P_{o,d}} x_{p,k}^{o,d} - 1 \right)^2 ! = 0.$$

EP 4 152 727 B1

FIG 4B

$$\sum_{\ell \in E} \left( \sum_{(o,d,p)} \sum_{\substack{k \in P_{o,d} \\ \ell \in k}} \frac{t_{(o,d,p)}}{c_\ell} x_{p,k}^{o,d} \right)^2$$

# FIG 5

**EP 4 152 727 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020396154 A1
- US 2017286852 A1